# EUROPÄISCHE PATENTSCHRIFT

(11) **EP 0 435 096 B1**
(45) Veröffentlichungstag und Bekanntmachung des Hinweises auf die Patenterteilung: **01.02.1995**
(21) Anmeldenummer: 90124119.0
(22) Anmeldetag: 13.12.1990
(51) Int. Cl.: B01D 33/073, B01D 33/46, B01D 33/64, B01D 33/72

(54) **Flüssigkeits-Feststoff-Separator, insbesondere Gülleseparator**
Liquid-solid separator, especially separator for manure
Séparateur solide-liquide, en particulier séparateur de lisier

(30) Priorität: 19.12.1989 DE 3941916
(43) Veröffentlichungstag der Anmeldung: 03.07.1991
(73) Patentinhaber: SÜDTECH UMWELT-ANLAGENBAU GmbH, D-84478 Waldkraiburg (DE)
(72) Erfinder: Oberbacher, Josef, W-8261 Aschau (DE)
(74) Vertreter: Flach, Dieter Dipl.-Phys.

(56) Entgegenhaltungen:
- EP-A- 0 283 870
- DE-A- 1 536 843
- DE-B- 2 743 556
- DE-C- 497 237
- DE-C- 557 795
- FR-A- 596 139
- FR-A- 2 136 358
- GB-A- 220 157
- US-A- 1 850 044
- US-A- 2 689 654

## Beschreibung

Die Erfindung betrifft einen Flüssigkeits-Feststoff-Separator, insbesondere Gülleseparator, nach dem Oberbegriff des Anspruches 1.

Ein solcher gattungsbildender Flüssigkeits-Feststoff-Separator ist aus der DE-B 20 63 345 bekannt geworden. Er enthält einen obenliegenden Zuführtrichter.

Eine Anpassung und Abdichtung des nach unten hin offenen Zuführtrichters an die darunter frei drehbar und durch keine separate Gehäusewand geschützte Siebtrommel erfolgt teilweise durch auf den Umfangsmantel der Siebtrommel aufliegende Gummidichtungen sowie eine von außen her auf die Siebtrommel andrückende Druckwalze. Die Druckwalze wird durch eine direkt in Achsenrichtung beaufschlagbare Druckfeder druckbelastet. Hierüber kann eine Krafteinstellung über nach außen hin frei Zugängliche Einstellglieder vorgenommen werden. Die Führung und Abdichtung der Druckwalze vor allem bei Veränderung des Feder-Kraftspeichers ist jedoch problematisch. Nachteilig ist ferner, daß die im Inneren der Siebrommel angeordneten Quetschwalzen eine sich in die Öffnung des Filters eindrückbare verformbare Oberfläche aufweisen. Dies führt zu Problemen beim Auspressen der aus der Siebaußenseite anliegenden Feststoffpartikel, wodurch die Effizienz der Anlage vermindert wird.

Aus der Produktveröffentlichung _{"}SÜDSTALL-GMBH Information GÜLLE-SEPARATOR Typ S84" ist ein Gülle-Separator für stationären Betrieb in der Praxis bekannt geworden, der eine in einem Vorrichtungsgehäuse gelagerte Siebtrommel umfaßt. Über einen über den oberen Abschlußdeckel überstehenden trichterförmigen Einlaßbereich wird die mit Feststoffen versetzte Gülle zugeführt, und zwar auf einen oberen Ausschnittbereich der rotierenden Siebtrommel. Über innen und außen wechselweise sitzenden und zusammenwirkenden Andruckwalzen kann die Flüssigkeit durch die Siebtrommel nach unten hin ablaufen, während zwischen den Anpreßwalzen die Feststoffe hindurchgeführt und über eine nachfolgende Austragsrutsche nach außen hin abgegeben werden.

Schließlich ist aus der EP-A1-0 283 870 auch noch ein Verfahren sowie eine Vorrichtung zum Entwässern von Filterkuchen bekannt geworden. Dieses Verfahren ist also nur für jene Fälle anwendbar, bei denen ein an sich bereits schichtweise vorhandener Filterkuchen durch Aufwendung von Druck noch weiter entwässert werden soll. In Flüssigkeiten befindliche Feststoffe können durch dieses Verfahren aus der Flüssigkeit nicht separiert werden.

Das vorbekannte Verfahren zum Entwässern von Filterkuchen arbeitet mit einer Vorrichtung, bei welcher der auf einem Filtertuch aufliegende Filterkuchen über einen Bandfilter, vorzugsweise einen horizontalen Vakuumbandfilter, und anschließend durch eine Bandpresse geführt wird, welche im wesentlichen aus einer Trommel besteht. Um diese Trommel herum wird das Filtertuch teilweise derart herumgelegt, daß der Filterkuchen an der Trommel anliegt. Ferner sind zusätzliche Preßwalzen vorgesehen, welche das Filtertuch und damit den Filterkuchen an die Trommel anpressen und dadurch den Filterkuchen entwässern. Die Preßwalzen werden dabei durch Pneumatikzylinder durckbelastet, worüber die Preßwalzen elastisch an der Unterseite des Preßbandes andrückbar sind.

Aufgabe der vorliegenden Erfindung ist es von daher ausgehend von dem gattungsbildenden Stand der Technik einen Flüssigkeits-Feststoff-Separator derart weiterzubilden, daß auch bei gesteigerter Betriebslaufzeit die Flüssigkeitstrennung höchst effizient durchgeführt werden kann.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Erfindungsgemäß wird eine Steigerung der Flüssigkeitstrennung dadurch erzielt, daß insbesondere die inneren Druckwalzen mit einer Oberflächenstruktur versehen sind, die rillen- oder noppenförmig gestaltet ist. Durch die Oberflächenstruktur läßt sich in überraschender Weise der Entwässerungsvorgang optimieren. Denn die Rillen und Noppen dienen dazu, daß die Flüssigkeit ablaufen bzw. abgeführt werden kann.

Verbesserte Ergebnisse lassen sich unter anderem aber auch durch Verwendung der an sich bekannten Andrückeinstelleinrichtungen für die Druckwalzen erzielen, die einen kraftspeicher-belasteten Schwenkhebel umfassen.

In einer besonders bevorzugten Ausführungsform ist der Zulaufstutzen unterhalb der Trennzone angeordnet. Besonders durch diese Ausführungsform kann auch gewährleistet werden, daß Fremdkörper, wie beispielsweise Steine, in dieser Trennzone abgeschieden werden und liegen bleiben, ohne die Druckwalzen oder die Siebtrommel zu zerstören oder den Entwässerungsvorgang zu beeinträchtigen bzw. zu verschlechtern.

Dies bietet aber vor allem den Vorteil, daß bei Abschaltung der Anlagen die in der Trennzone noch befindliche und mit Feststoffen durchsetzte Flüssigkeit einschließlich der am Boden der Absetzzone abgesetzten Fremkörper durch Rückströmung der Flüssigkeit aus dem Zulaufstutzen wieder entfernt werden. Dadurch wird gewährleistet, daß sich im Zulaufstutzen nach Abschalten der Anlage die dort verbleibende Flüssigkeit mit den Feststoffen im Laufe der Zeit nicht durch einen Trocknungsvorgang verhärtet und verklebt, was stets aufwenidge Reinigungsarbeiten erfordert.

Auch die Austragsrutsche weist gegenüber herkömmlichen Lösungen deutliche Verbesserungen auf. Sie ist vor allem mit dem Abstreifeingebaut, sondern kann durch einen einfachen Hebelverstellmechanismus in Öffnungsstellung verschwenkt und in dieser Lage durch eine andere Rutsche ersetzt werden.

Schließlich kann auch durch eine ständig integrierte Reinigungseinrichtung vor allem auch unter Verwendung von Spritzdüsen die Siebtrommel weitgehend frei von Verstopfungen durch die in der Flüssigkeit befindlichen Feststoffe gehalten werden, wodurch ein langfristiger problemloser Betrieb möglich wird.

Die Erfindung wird nachfolgend anhand von Zeichnungen für verschiedene Ausführungsbeispiele näher erläutert. Dabei zeigen im einzelnen:
- Figur 1 :: eine schematische Stirnseitenansicht parallel zur Siebtrommel-Achse bei entfernter Frontverkleidung;
- Figur 2 :: eine zu Figur 1 vergleichbare Darstellung mit einer Klemmeinrichtung für die Druckwalzen;
- Figur 3 :: eine weitere Darstellung zur Erläuterung der Funktionsweise einer Austragsrutsche;
- Figur 4 :: eine Darstellung mit eingebauter Reinigungsvorrichtung;
- Figur 5 :: eine auszugsweise Querschnittdarstellung durch die Siebtrommel;
- Figur 6 :: ein abgewandeltes Ausführungsbeispiel in Stirnseiten-Schnittdarstellung;
- Figur 7 :: eine auszugsweise Darstellung der Zulauf-Anordnung;
- Figur 8 :: ausschnittsweise Draufsicht auf eine mit einer rillenförmigen Oberflächenstruktur versehenen inneren Druckwalze.

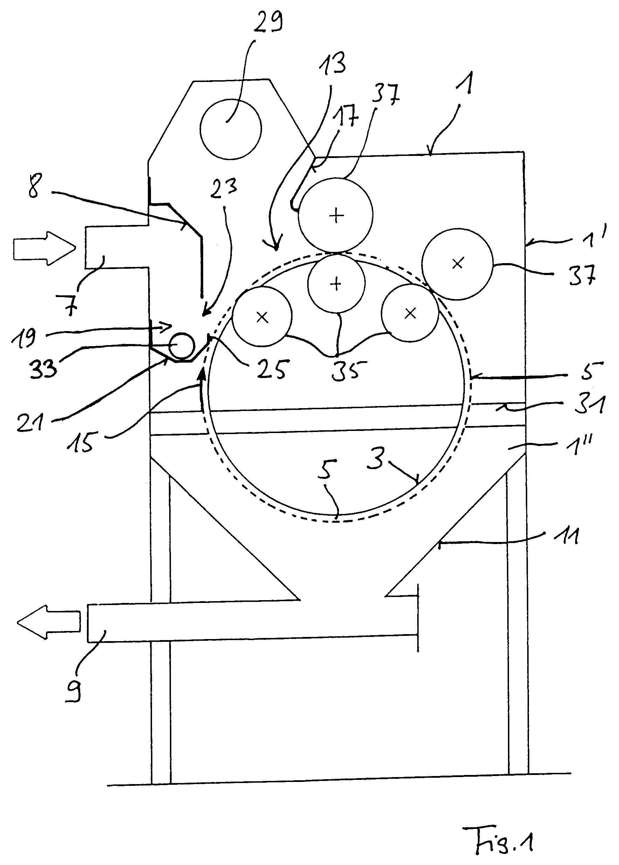

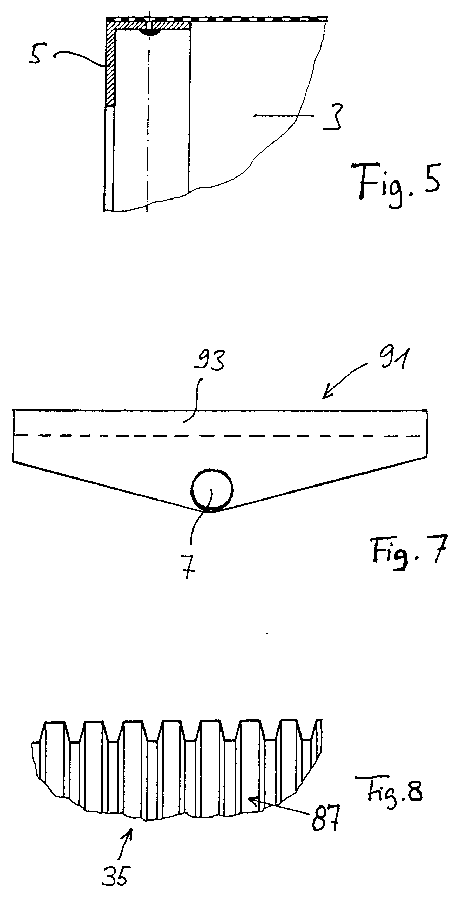

In den Zeichnungen ist in schematischer Darstellung, vor allem in vertikaler Schnittdarstellung, in paralleler Ansicht zur Längsachse einer Siebtrommel ein Flüssigkeits-Feststoff-Separator, nachfolgend auch kurz Gülle-Separator genannt, dargestellt. Er umfaßt im wesentlichen ein Vorrichtungsgehäuse 1 mit der im Inneren des Gehäuses gelagerten Siebtrommel 3, deren Axiallänge in etwa der Gesamtbreite des Vorrichtungsgehäuses 1, d.h. dem lichten Innenabstand zwischen den gegenüberliegenden Gehäuseinnenwänden entspricht. Damit der an sich gegebenenfalls scharfkantig auslaufende in Stirnseitenansicht kreisförmige Begrenzungsrand der Siebtrommel 3 sich nicht an der entsprechenden Innenwand des Vorrichtungsgehäuses 1 eingräbt und einarbeitet, kann die Siebtrommel 3 mit einem umlaufenden Ringflansch 5 (Figur 5) versehen sein, wie dies in Figur 1 strichliert angedeutet ist. Dadurch ergibt sich eine größere Auflagefläche an der entsprechenden Innenfläche der gegenüberliegenden Gehäusewände. Zusätzlich können noch Gleitringe, Gleitrollen oder abschnittsweise wirksame Gleitstücke beispielsweise an der Gehäuseinnenwand vorgesehen sein, um einen abriebfreieren problemlosen Betrieb bei Anlage des Ringflansches 5 an den Gleitstücken zu gewährleisten.

Am Vorrichtungsgehäuse 1 ist ein Zulaufstutzen 7 mit nachfolgendem Umlenk- oder Prallblech 8 und ein unten liegender Ablaufstutzen 9 für die die Siebtrommel durchlässigen Flüssigkeiten vorgesehen, wobei der Ablaufstutzen 9 von einem unteren trichterförmigen Auffangbecken 11 ausgeht.

Wie vor allem auch aus Figur 1 ersichtlich ist, ist die eigentliche Flüssigkeits-Feststoffe trennende Trennzone 13 bei stirnseitiger Ansicht der Stirntrommel 3 auf einen Winkelbereich in etwa vergleichbar einer Zehn-Uhr-Stellung bis zu einer Ein-Uhr-Stellung des Stundenzeigers beschränkt, wobei die Trennzone 13 sich über die gesamte Breite des Vorrichtungsgehäuses, d.h. über die gesamte Breite der Siebtrommel 3 erstreckt. Ein in Rotationsrichtung der Siebtrommel 3 gemäß dem Pfeil 15 nachlaufendes Begrenzungsblech 17 begrenzt die Trennzone 13 in Rotationsrichtung, wobei die stirnseitigen Begrenzungen durch die Gehäusewände des Vorrichtungsgehäuses 1 erzielt wird.

Der Trennzone 13 unmittelbar vorgelagert ist eine Beruhigungszone 19 nach Art eines Zwischenbeckens mit einem tiefliegenden Beckenboden 21, der tiefer liegt als der Zulaufstutzen 7 und auch tiefer liegt als die entsprechende Austrittsöffnung 23, die von der Beruhigungszone 19 zur nachfolgenden Trennzone 13 führt. Fremdkörper, wie insbesondere Steine, können so am Beckenboden 21 abgelagert werden und können die nachfolgend auch noch zu beschreibende Druckwalzen oder die Siebtrommel nicht beschädigen. Zur Effizienzerhöhung ist deshalb im Austrittsbereich 23 der Beruhigungszone 19 ein parallel zur Siebtrommel vorzugsweise über deren Gesamtbreite laufendes Leitblech 25 vorgesehen, welches mit einem Austrittswandabschnitt versehen ist, welcher von der Siebtrommel-Mantelfläche quasi wieder zurück abgewinkelt ist.

Bei einer mengenmäßig zu starken Förderung von einem zu trenneden Flüssigkeits-Feststoff-Gemisch kann das zu viel beförderte und nicht in gleicher Zeiteinheit zu trennende Gemisch über einen oben liegenden Überlaufstutzen 29 wieder beispielsweise in ein nicht näher dargestelltes Güllebecken zurückbefördert werden.

Die in der Stirnseitenansicht in den Zeichnungen dargestellten Gehäusewänden des Vorrichtungsgehäuses 1 können in eine obere und untere Gehäusewand 1' bzw. 1'' unter Bildung eines dazwischen liegenden Schlitzes 31 getrennt sein, wobei in der gewählten Darstellung in dem oberen Gehäusewandabschnitt 1' in axialer Verlängerung der Beruhigungszone 19, d.h. in axialer Verlängerung des Beckenbodens 21 ein von außen her flüssigkeitsdicht verschließbarer Deckel 33 vorgesehen ist, um bei abgeschalteter Vorrichtung bei abgenommenem Deckel 33 die in der Beruhigungszone befindlichen Fremdkörper von außen her ohne weitere Demontage der Vorrichtung zu entfernen.

In Figur 1 ist die Lagerung der Trommel näher dargestellt. Diese lagert zum einen auf drei inneren nachfolgend auch als Gegendruckwalzen bezeichneten Druckwalzen 35, wobei zwei nachlaufende Gegendruckwalzen 35 mit zwei außenliegenden Druckwalzen 37 paarweise zusammenwirken, zwischen denen hindurch der Siebtrommel-Mantel hindurchverläuft. Die inneren und äußeren Druckwalzen 35 und 37 weisen z.B. ebenfalls wieder eine der Siebtrommel 3 entsprechende Breite auf, wobei der erwähnte Ringflansch 5 stirnseitig benachbart zu den Gegendruckwalzen 37 an diesen vorbeiläuft.

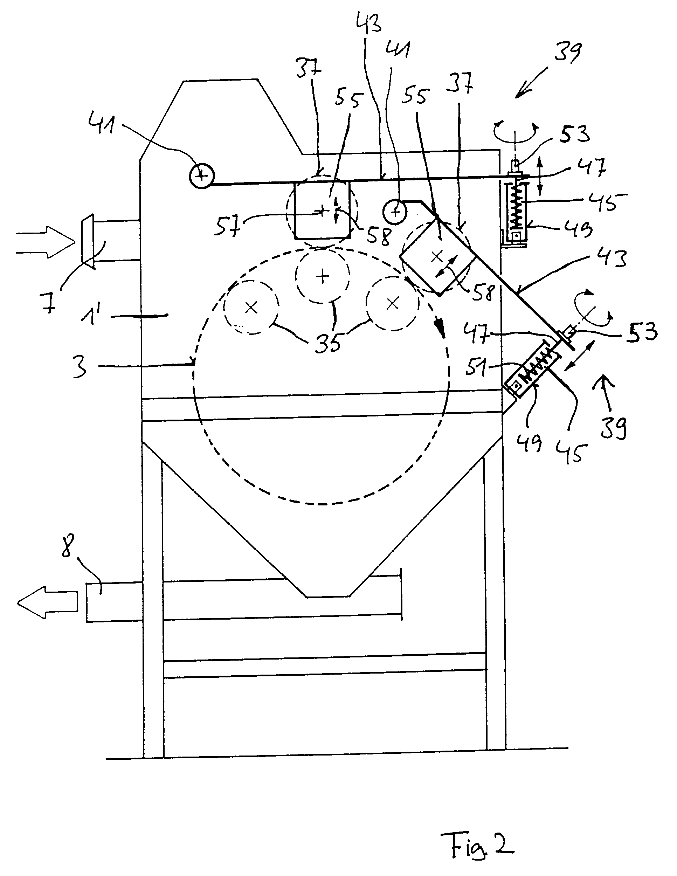

Die einzelnen unteren die Siebtrommel tragenden Gegendruckwalzen 35 und/oder die oberen Druckwalzen 37 können durch einen geeigneten motorischen Antrieb angetrieben werden. Dieser kann beispielsweise aus einem einzigen Elektromotor bestehen, wobei die einzelnen Druckwalzen 35 und/oder 37 über einen gemeinsamen Kettenantrieb in Triebverbindung stehen. Aber auch eine andere Antriebseinrichtung mittels einer Getriebeverbindung über Stirnräder oder eine abgestimmte elektrische Antriebsanordnung oder evtl. auch ein hydraulischer Antrieb ist möglich. Bei Verwendung eines gemeinsamen umlaufenden Kettenantriebes kann ergänzend zu den in den Zeichnungen dargestellten Ausführungsbeispielen noch ein zusätzliches unter Federvorspannung stehendes Zahnrad vorgesehen sein, um die umlaufende Kette stets zu spannen. In diesem Falle sind also beispielsweise außerhalb des Gehäuses in der Seitendarstellung gemäß Figur 2 nach außen hin benachbart zu den in Figur 2 dargestellten Halte- und Abdichtplatten 55 noch die mit den Achsen 57 der Walzen 35 und 37 in Triebverbindung stehende Zahnräder vorgesehen.

In der Zeichnung gemäß Figur 2 ist auch dargestellt, daß das die Trennzone 13 in Rotationsrichtung der Siebtrommel 3 begrenzende Begrenzungsblech 17 bevorzugt so angeordnet ist, daß die Trennkammer über das Begrenzungsblech 17 und die erste der oberen, also äußeren Druckwalzen 37 von dem nachfolgenden Gehäuseinnenraum oberhalb der Siebtrommel getrennt wird. Das freie Ende des Begrenzungsbleches 17 endet dabei z.B. über einen Krümmungsabschnitt direkt auf der Manteloberfläche der Druckwalze 37. Somit kann die Flüssigkeit in dem durch das Begrenzungsblech 17 und die erste der oberen Druckwalzen 37 in Rotationsrichtung begrenzten Raum nur durch die rotierende Siebtrommel nach unten hin ablaufen, wohingegen die Feststoffteile zwischen der rotierenden Siebtrommel und der ersten und dann auch weiteren oberen Druckwalzen 37 hindurchgeführt und darüber zusätzlich ausgepreßt werden. Beim Durchlauf der Feststoffanteile können dabei die Druckwalzen entsprechend der Federvorspannkraft federnd nachgeben.

Um nun die Anpreßkräfte, mit denen jede der äußeren Druckwalzen 37 auf die Siebtrommel 3 und damit letztlich auf die die Druckkräfte abstützenden innenliegenden Gegendruckwalzen 35 wirken, auch während des Betriebes der Anlage einstellen zu können, ist pro äußere Druckwalze 37 eine Andruckeinstelleinrichtung 39 vorgesehen. Diese besteht jeweils aus einem um eine Achse 41 verschwenkbaren und am Vorrichtungsgehäuse 1 angelenkten Schwenkhebel 43, an dessem freien Ende gegenüberliegend zur Achse 41 ein einstellbarer Kraftspeicher 45 sitzt. Dieser besteht im gezeigten Ausführungsbeispiel aus einer Spiralfeder, die sich einmal letztlich am Vorrichtungsgehäuse 1 abstützt und gegenüberliegend auf den Schwenkhebel 43 wirkt. Dazu ist am freien Ende des Schwenkhebels 43 ein Ankerbolzen 47 mit in ein Federspeichergehäuse 49 eintauchender Ankerplatte vorgesehen, zwischen der und der schwenkhebelseitigen Durchtrittsöffnung liegenden Begrenzungswand des Federspeichergehäuses 49 die in Figur 2 dargestellte Spiralfeder 51 sich abstützt. Durch Verstellung der Muttern 53 kann der Ankerbolzen 47 in seiner Lage einschließlich seiner untenliegenden Ankerplatte und damit die Vorspannkräfte eingestellt werden, mit welcher der jeweilige Schwenkhebel 43 und damit die zugehörige Druckwalze 37 auf den Mantel der Siebtrommel 3 und damit letztlich die innenliegenden Druckwalzen 35 wirkt.

Die Schwenkhebel 43 wirken dabei ferner noch als Hebelübersetzungsgetriebe zur Erhöhung der Anpreßkräfte. Dazu sind noch am Schwenkhebel 43 gehäuseaußenseitig Halte- und Abdichtplatten 55 angebracht, an denen die Achsen 57 der äußeren Druckwalze 37 verankert sind. Als Kraftspeicher ist ein mechanischer Kraftspeicher vorgesehen. Es kann aber auch ein hydraulisch, pneumatisch und/oder magnetisch wirkender Kraftspeicher verwendet werden.

Wie in der Zeichnung nicht näher dargestellt ist, sind im wesentlichen schlitzförmige, gegebenenfalls um die jeweilige Verschwenkachse 41 leicht bogenförmig angeordnete Schlitze vorgesehen, durch welche hindurch die entsprechenden Achsen 57 zur Lageveränderung der Druckwalzen 37 ragen und längs des Doppelpfeiles 58 verstellt werden können. Durch die erwähnte Abdichtung kann keine Flüssigkeit von innen nach außen austreten.

Die erläuterte Andruckeinstelleinrichtung 39 ermöglicht es, bei laufendem Betrieb die Veränderung der Anpreßkräfte vorzunehmen, was wichtig ist, wenn sich der Feststoffanteil hinsichtlich prozentualem Anteil, Dicke etc. verändert, um eine optimale Trennung stets zu gewährleisten.

Wie aus der Zeichnung auch zu ersehen ist, sind die Schwenkhebel 43 und auch die Federspeicher 45 so angeordnet, daß sie im wesentlichen zu der axialen Berührgeraden zwischen Druckwalze 37 und Siebtrommel 3 in axialer Seitenansicht in etwa tangential verlaufen. Sie können gegenüber einer so gelegten Tangente aber auch einen Winkel von weniger als ± 45°, ± 10° oder ± 5° aufweisen.

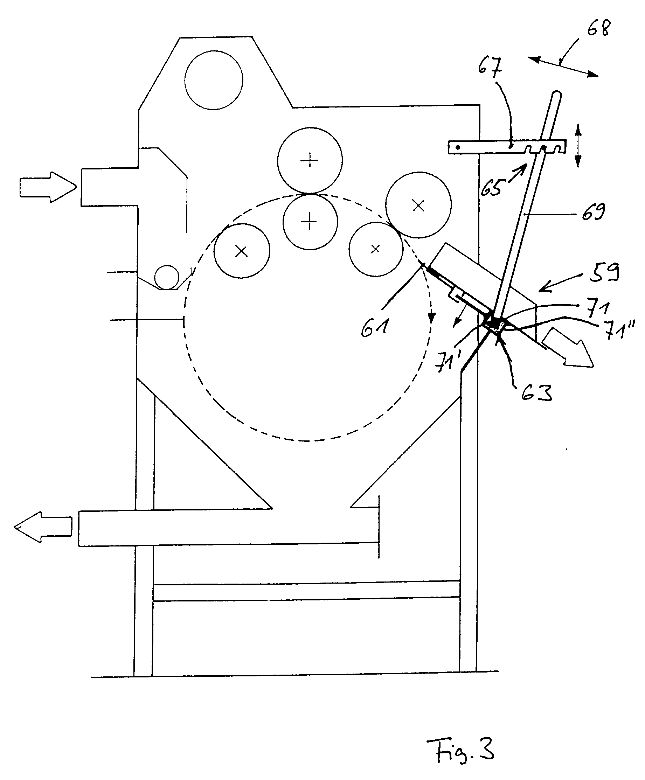

Im Betrieb kann die Flüssigkeit in der Trennzone 13 problemlos durch die Siebtrommel 3 hindurchströmen, wird in dem unteren Auffangbecken 11 aufgefangen und läuft dann über den Ablaufstutzen 9 ab. Die am Außenmantel der Siebtrommel 3 zwischen den Gegendruckwalzen und dem Außenmantel der Siebtrommel 3 hindurchgeführten ausgepreßten Feststoffanteile werden mit der Siebtrommel in Uhrzeigerdarstellung bis zu einer nachfolgenden Austragsrutsche 59 (Figur 3) weiter transportiert, von der sie mittels eines an der Manteloberfläche der Siebtrommel 3 anliegenden Feststoffschabers 61 ergriffen und über die Rutsche nach außen hin abgeführt werden.

Um stets eine optimale Anlage des Feststoffschabers 61 und damit der Austragsrutsche 59 an der Siebtrommel auf deren gesamter Breite zu gewährleisten, und zwar selbst dann, wenn die Siebtrommel 3 rotiert, ist die Austragsrutsche 59 über eine Federeinrichtung 63 z.B. in Form eines Gummifederkraftspeichers auf die Oberfläche der Siebtrommel 3 vorgespannt.

Durch Lösen eines Arretierhebels 67 und Nachvorneverdrehen des Vorspannhebels 69 längs des Doppelpfeiles 68 kippt die Austragsrutsche 59 im Uhrzeigersinn um die Vorspannachse 71, so daß nach Betätigung dieses Lösemechanismus 65 die Austragsrutsche oder Feststoffschaber 61 problemlos ausgewechselt oder gewendet werden kann. Der Vorspannmechanismus besteht im wesentlichen aus zwei ineinander konzentrisch verlaufenden Profilen 71' und 71'' mit dazwischen liegendem Gummikörper, wobei durch Verschwenken des Vorspannhebels 69 in die in Figur 3 dargestellte Funktionsstellung über die Gummikörper das entsprechende äußere Profil 71'' die Austragsrutsche 59 stets im Gegenuhrzeigersinn so vorgespannt wird, daß auch bei zunehmender Abnutzerscheinung der Feststoffschaber 61 an der Siebtrommel stets optimal anliegt. Auch bei festgestellter Verschmutzung des Feststoffschabers 61 und damit sich stetig verschlechternder Schabwirkung kann nach entsprechendem Verstellen des Vorspannhebels 69 der Feststoffschaber schnell gereinigt und in seine Funktionsstellung zurückverstellt werden.

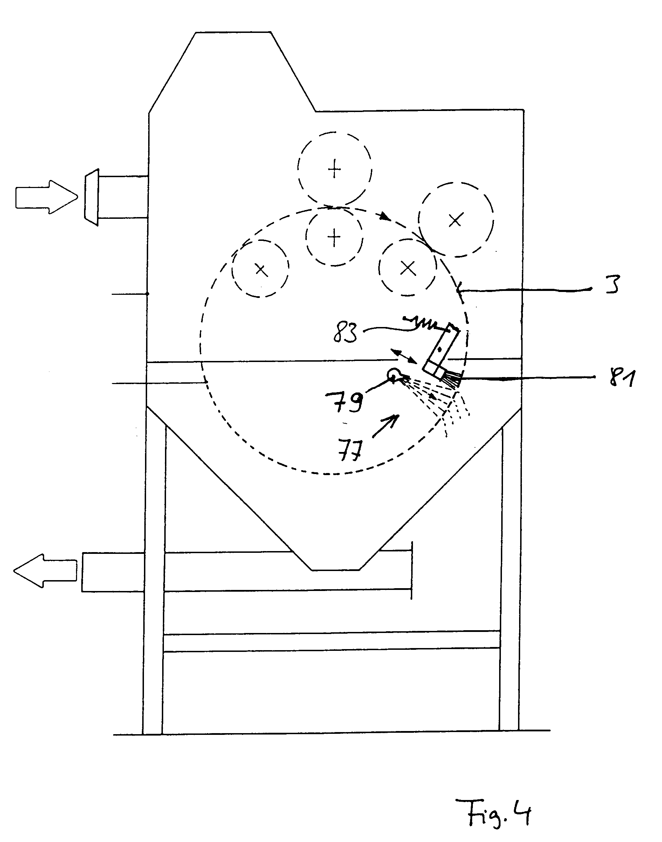

In Figur 4 ist schließlich noch gezeigt, daß ein Festsetzen von Feststoffen und ein Verschließen der Siebmaschen durch Feststoffpartikel wirksam ohne große Demontage der Vorrichtung dadurch gewährleistet werden kann, daß zusätzlich noch im Inneren der Siebtrommel 3 eine Reingungsvorrichtung 77 vorgesehen ist, die im gezeigten Ausführungsbeispiel aus einer sich über die gesamte Breite der Siebtrommel erstreckende Spritzeinrichtung 79 sowie einem Borstenreiniger 81 besteht, dessen Borsten von innen her unter Vorspannwirkung 83 auf die Siebtrommel gedrückt werden.

Im gezeigten Ausführungsbeispiel sind im wesentlichen die beiden nachlaufenden Druckwalzen 37 und die Gegendruckwalzen 35 so angeordnet, daß diese paarweise unmittelbar zusammenwirken. Grundsätzlich könnte aber die Anordnung auch versetzt liegend angeordnet sein, wenn die Siebtrommel 3 stabil genug aufgebaut ist, um die Anpreßkräfte auch bei Fehlen einer direkten Gegenlagerung aufzunehmen.

Schließlich wäre es in Abweichung des gezeigten Ausführungsbeispieles auch möglich, anstelle einer Siebtrommel 3 ein Sieb-Gewebeband zu verwenden, das in einer entsprechenden von der Kreisbahn abweichenden Umlaufbahn fortbewegt wird, wobei dieses dann entsprechend durch Verwendung mehrerer Gegenabstützstellen oder -walzen gelagert werden müßte. Aber auch derartige Abwandlungen sollen unter dem Begriff "Siebtrommel" bei an sich funktionsgleichem, d.h. zumindest wirkungsgleichem oder ähnlichem Aufbau verstanden werden.

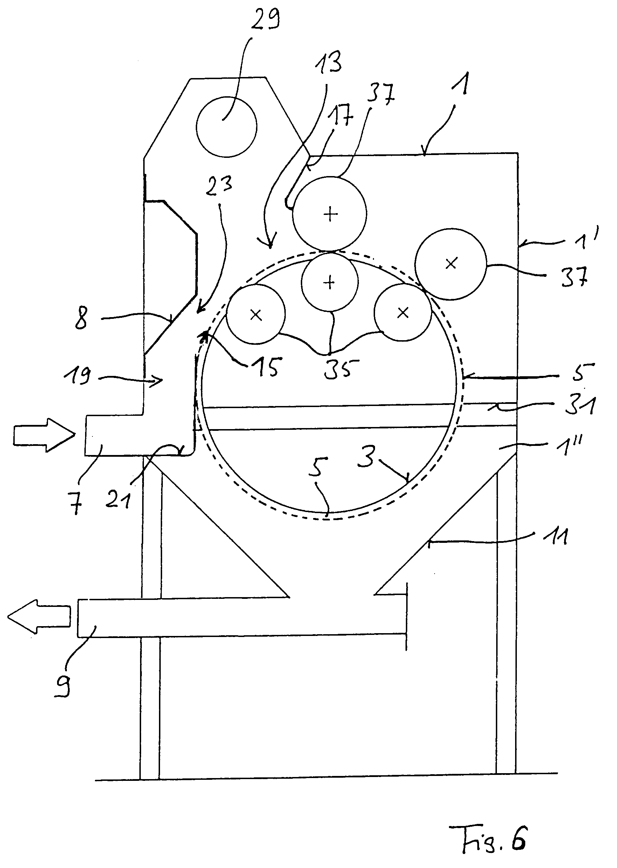

Wie in Figur 8 näher dargestellt ist, wird eine erhöhte Effizienz der Anlage dadurch erzielt, daß beispielsweise die innenliegenden Druckwalzen 35 mit einer Oberflächenstruktur 87 in Form von in Umfangsrichtung auf dem Walzenmantel verlaufenden Rillen versehen sind. Abweichend von den in Umfangsrichtung verlaufenden Rillen können auch andere Profile vorgesehen sein, bei denen beispielsweise die Rillen in Seitenansicht schräg oder diagonal verlaufen oder sich beispielsweise mehrere Rillenprofile unter Ausbildung von Noppen kreuzweise überschneiden. Weitere Abwandlungen sind ebenso denkbar.

Abschließend wird noch auf das Ausführungsbeispiel gemäß den Figuren 6 und 7 Bezug genommen, das eine Abwandlung zu den vorausgegangenen Ausführungsformen darstellt.

Die Ausführungsform gemäß Figur 6 und 7 unterscheidet sich von den anderen Ausführungsbeispielen dadurch, daß der Zulaufstutzen 7 an der tiefsten Stelle unterhalb der Trennzone 13 liegend vorgesehen ist.

Wie aus der Detaildarstellung gemäß Figur 7 hervorgeht, geht der rohrförmige Zulaufstutzen 7 in eine trichterförmige nach oben hin offene Erweiterung über, wobei auf den Mantel der Siebtrommel 3 zu liegend die trichterförmige Erweiterung 91 mehr oder weniger eben und parallel zur Längsachse der Siebtrommel 3 liegend ausgebildet ist, wobei die siebtrommelseitige Begrenzungswand der trichterförmigen Erweiterung 91 in eine über die gesamte Breite der Siebtrommel verlaufende Federzunge 93 beispielsweise in Form eines Federstahls ausläuft. Hierüber wird eine Abdichtung zwischen dem das Flüssigkeits-Feststoff-Gemisch enthaltenden Raum zur Siebtrommel und dem darunter befindlichen Auffangbecken 11 gebildet. Durch eine geringe Federvorspannung kann diese Abdichtwirkung stets erhalten werden.

Diese Ausführungsform weist den Vorteil auf, daß sehr schwere Fremdkörper zwar über einen Teil der Wegstrecke noch nach oben hin mitgenommen, aber bei langsamerer Förderung oder Abstellen der Förderung stets automatisch wieder nach unten hin in Richtung des Zulaufrohres 7 absinken und sich Fremdkörper wie beispielsweise Steine an dem durch das Zulaufrohr selbst gebildeten Beckenboden 21 ablagern können. Bei evtl. umstellbarer Förderrichtung der nicht näher dargestellten Pumpe könnten dann diese Fremdkörper sogar über das Zulaufrohr wieder rückgefördert und aus der Vorrichtung darüber problemlos entfernt werden.

Auch bei dieser Ausführungsform kann noch ein eine Umlenkung bewirkendes Prallblech 8 vorgesehen sein, um die Strömung vom Zulaufrohr 7 kommend über die trichterförmige Erweiterung 91 über eine der Länge der Siebtrommel entsprechende spaltförmige Austrittsöffnung 23 in die eigentliche Trennzone 13 zu ermöglichen. Der in diesem Ausführungsbeispiel vorgesehenen Beruhigungszone 19 kommt daher die Bedeutung einer Absenkzone 19 zu, zumindest dann, wenn die Förderstärke geringer ist oder die Vorrichtung zumindest kurzzeitig abgeschaltet oder zur Entfernung von Fremdkörpern in umgekehrter Förderrichtung kurzzeitig betrieben wird.

## Patentansprüche

1. Flüssigkeits-Feststoff-Separator, insbesondere Gülleseparator, mit den folgenden Merkmalen
- es ist eine in Umfangsrichtung antreibbare Siebtrommel (3) vorgesehen,
- es ist eine Trennkammer für das zu separierende Flüssigkeits-Feststoff-Gemisch vorgesehen,
- ein Ausschnitt des Mantels der siebtrommel (3) bildet eine Trennzone (13),
- innerhalb und außerhalb der Siebtrommel (3) sind innere bzw. äußere Druckwalzen (35, 37) vorgesehen, die auf den Mantel der Siebtrommel (3) abrollen und die Siebtrommel lagern, und die der unterstützenden Trennung des Feststoff-Flüssigkeits-Gemisches dienen,
- der Trennzone (13) ist in Rotationsrichtung der Siebtrommel (3) ein Feststoffaustrag (59, 61) nachgeordnet,
- es ist eine Andrückeinstelleinrichtung (39) vorgesehen, die während des Betriebs einstellbare Kraftspeicher (45) aufweist,
**gekennzeichnet durch** die folgenden weiteren Merkmale
- die Andrückeinstelleinrichtung (39) der jeweiligen Druckwalze (37) zur Einstellung der Anspreßkräfte der Druckwalzen (37) gegenüber der Siebtrommel (3)umfaßt einen Schwenkhebel (43), mit dessen freiem Ende der zugeordnete Kraftspeicher (45) verbunden ist,
- die Druckwalzen (35, 37) weisen eine Oberflächenstruktur (87) auf, und
- die Oberflächenstruktur (87) zumindest der inneren Druckwalzen (35, 37) ist rillen- oder noppenförmig gestaltet.

2. Flüssigkeits-Feststoff-Separator nach Anspruch 1, **dadurch gekennzeichnet**, daß die Oberflächenstruktur (87) mehrere rillenartige Vertiefungen umfaßt, die in radialer Umfangsrichtung oder auch mit in axialer Richtung zur zugehörigen Druckwalze (35, 37) ausgerichteter Komponente verlaufen, wobei sie vorzugsweise nebeneinander oder in sich überschneidenden Mustern angeordnet sind.

3. Flüssigkeits-Feststoff-Separator nach Anspruch 1 oder 2, **dadurch gekennzeichnet**, daß die Kraftspeicher (45) an den Schwenkhebeln (43) versetzt zu den durch sie druckbelasteten Druckwalzen (35, 37) angreifen.

4. Flüssigkeits-Feststoff-Separator nach einem der Ansprüche 1 bis 3, **dadurch gekennzeichnet**, daß der jeweilige Schwenkhebel (43) gehäuseaußenseitig an einer Achse (41) angelenkt und mit Halte- und Abdichtplatten (55) versehen ist, an welchem die Achsen der einstellbaren Druckwalzen (37), die durch einen gehäuseseitigen Schlitz hindurchragen, in einem die Schlitze überdeckenden abdichtenden Montagesitz gehalten sind.

5. Flüssigkeits-Feststoff-Separator nach Anspruch 4, **dadurch gekennzeichnet**, daß in axialer Stirnseitenansicht der mittels der Schwenkhebel (43) belasteten Druckwalzen (37) zwischen einer durch den jeweiligen Berührpunkt zwischen einer Druckwalze (37) und einer Siebtrommel (3) gelegten Tangente und den betreffenden Schwenkhebel (43) ein Winkel von weniger als ± 25° insbesonder weniger als ± 15°, vor allem weniger als ± 10° oder ± 5° eingeschlossen ist.

6. Flüssigkeits-Feststoff-Separator nach einem der Ansprüche 1 bis 5, **dadurch gekennzeichnet**, daß der Kraftspeicher (45) etwa rechtwinkelig zum zugehörigen Schwenkhebel (43) verläuft.

7. Flüssigkeits-Feststoff-Separator nach einem der Ansprüche 1 bis 6, **dadurch gekennzeichnet**, daß der Kraftspeicher (45) aus einem hydraulischen, pneumatischen und/oder magnetischen Kraftspeicher gegebenenfalls mit einem zusätzlich vorgesehenen mechanischen Kraftspeicher besteht.

8. Flüssigkeits-Feststoff-Separator nach einem der Ansprüche 1 bis 7, **dadurch gekennzeichnet**, daß der Zulaufstutzen (7) unterhalb der Trennzone (13) liegt und eine Absetzzone (19) durch einen aufsteigenden Strömungskanal gebildet wird.

9. Flüssigkeits-Feststoff-Separator nach einem der Ansprüche 1 bis 8, **dadurch gekennzeichnet**, daß zwischen dem tieferliegenden Zulaufstutzen (7) und der demgegenüber höherliegenden Trennzone (13) eine nach oben hin trichterförmige Erweiterung (91) vorgesehen ist.

10. Flüssigkeits-Feststoff-Separator nach einem der Ansprüche 1 bis 7, **dadurch gekennzeichnet**, daß der Trennkammer eine parallel zur Siebtrommel (3) liegende Beruhigungs- und/oder Absetzzone (19) mit einem gegenüber dem Zulauf (7) tieferliegenden Bekkenboden (21) zum Absetzen von Fremdkörpern vorgeschaltet ist.

11. Flüssigkeits-Feststoff-Separator nach einem der Ansprüche 1 bis 10, **dadurch gekennzeichnet**, daß die vom Zulaufstutzen (7) zur Trennzone (13) führende siebtrommelseitige Begrenzungswand an der vorzugsweise vorgesehenen trichterförmigen Erweiterung (91) in einer auf den Siebtrommelmantel zu vorgespannt anliegenden Federzunge (93) ausläuft.

12. Flüssigkeits-Feststoff-Separator nach einem der Ansprüche 8 bis 10, **dadurch gekennzeichnet**, daß das Absetzbecken (21) im Bereich zur höherliegenden Austrittsöffnung (23) mit einem von der Mantelfläche der Siebtrommel (3) weg gerichteten Leitblech (25) versehen ist.

13. Flüssigkeits-Feststoff-Separator nach einem der Ansprüche 1 bis 12, mit einer Vorspanneinrichtung für die Austragsrutsche (59), mittels derer in Betriebsstellung ein siebtrommelseitiger Feststoffschaber (61) in stetiger Anlage an der Mantelfläche der Siebtrommel (3) angedrückt haltbar ist, **dadurch gekennzeichnet**, daß die Vorspanneinrichtung aus einer doppelprofilartigen gegeneinander relativ verdrehbarer Vorspannachse (71) mit zwischen den beiden konzentrisch zueinander sitzenden Profilen (71', 71'') gelagerten und die Vorspannkräfte erzeugenden Gummielementen besteht, und daß vorzugsweise für die Austragsrutsche (59) ein Lösemechanismus (65) vorgesehen ist, mittels dessen die Austragsrutsche (5) in Außereingriff mit der Siebtrommel (3) bringbar ist.

14. Flüssigkeits-Feststoff-Separator nach einem der Ansprüche 1 bis 13, **dadurch gekennzeichnet**, daß eine vorgesehene Austragsrutsche (59) ausklappbar ist.

15. Flüssigkeits-Feststoff-Separator nach einem der Ansprüche 1 bis 14 mit einer weiteren Reinigungsvorrichtung (77) für die Siebtrommel (3), **dadurch gekennzeichnet**, daß die Reinigungseinrichtung (77) eine Spritz- und Sprüheinrichtung (79) und/oder ein Borstenreinigungselement (81), die jeweils von innen nach außen wirken, umfaßt.

16. Flüssigkeits-Feststoff-Separator nach einem der Ansprüche 1 bis 15, **dadurch gekennzeichnet**, daß die Siebtrommel (3) an ihren gegenüberliegenden Stirnseiten mit einem radial nach innen oder nach innen und außen überstehenden Ringflansch (5) versehen ist.

17. Flüssigkeits-Feststoff-Separator nach Anspruch 16, **dadurch gekennzeichnet**, daß zwischen dem Ringflansch (5) und der entsprechenden Zentrierwand, insbesondere Gehäuseinnenwand zumindest abschnittsweise Gleitstücke oder Gleitrollen angeordnet sind.

## Claims

1. A liquid-solid separator, and more particularly a separator for liquid soils from farm animals, having the following features:
- a sieve drum (3) is provided which is able to be driven in the peripheral direction,
- a separating chamber for the liquid-solid mixture to be separated is provided,
- a section of the casing of the sieve drum (3) constitutes a separating zone (13),
- internally and externally of the sieve drum (3) internal and, respectively, external squeeze rolls (35 and 37) are provided rolling on the casing of the sieve drum (3) and bearing the same, and which serve for the supportive separation of the solid-liquid mixture,
- in the direction of rotation of the sieve drum (3) the separating zone (13) is followed by a solids outlet (59 and 61),
- a pinch setting device (39) is provided which during operation possesses adjustable force storage means (45),
characterized by the following further features:
- the pinch setting device (39) of each respective squeeze roll (37) for setting the squeeze forces of the squeeze rolls (37) with respect to the sieve drum (3) comprises a pivotal lever (43), with whose free end the associated force storage means (45) is connected,
- the squeeze rolls (35 and 37) possess a surface grain (87), and
- the surface grain (87) of the internal squeeze rolls (35 and 37) at least is formed with grooves or bulges.

2. The liquid-solid separator as claimed in claim 1, characterized in that the surface grain (87) comprises a plurality of groove-like recesses, which run in the radial peripheral direction or also with a component aligned in the axial direction with respect to the respective squeeze roll (35 and 37), the same preferably being arranged alongside each other or in overlapping patterns.

3. The liquid-solid separator as claimed in claim 1 or claim 2, characterized in that the force storage means (45) are applied to the pivotal levers (43) with an offset to the squeeze rolls (35 and 37) exerting a thrust on them.

4. The liquid-solid separator as claimed in any one of the claims 1 through 3, characterized in that each respective pivotal lever (43) is pivoted externally on the housing at a shaft (41) and is provided with holding and sealing plates (55) on which the shafts of the adjustable squeeze rolls (37), which extend through a slot in the housing, are held in a sealing assembly seat covering the slots.

5. The liquid-solid separator as claimed in claim 4, characterized in that as seen in an axial end-on view of the squeeze rolls (37) loaded by means of the pivotal (43) levers between a tangent to the a respective point of contact between a squeeze roll (37) and a sieve drum (3) and the respective pivotal lever (43) an angle of less than ± 25° and more particularly less than ± 15°, or more especially ± 10° or ± 5° is included.

6. The liquid-solid separator as claimed in any one of the claims 1 through 5, characterized in that the force storage means (45) extends generally at a right angle to the respective pivotal lever (43).

7. The liquid-solid separator as claimed in any one of the claims 1 through 6, characterized in that the force storage means (45) consists of a hydraulic, pneumatic and/or magnetic force storage means, possibly with an additionally provided mechanical force storage means.

8. The liquid-solid separator as claimed in any one of the claims 1 through 7, characterized in that the inlet connection point (7) is underneath the separating zone (13) and a deposit zone (19) is constituted by an ascending flow duct.

9. The liquid-solid separator as claimed in any one of the claims 1 through 8, characterized in that between the lower down inlet point (7) and the higher up separating zone (13) an upwardly directed funnel-like wider part (91) is provided.

10. The liquid-solid separator as claimed in any one of the claims 1 through 7, characterized in that the separating chamber is preceded by a settling and/or deposition zone (19), arranged parallel to the sieve drum (3), with a basin bottom (21), placed at a lower level than the inlet (7), for the settling out of foreign matter.

11. The liquid-solid separator as claimed in any one of the claims 1 through 10, characterized in that the limiting wall on the sieve drum side and leading from the inlet point (7) to the separating zone (13) has its end at the preferably provided funnel-like wider part (91) in a spring spur (93) engaging the sieve drum casing with bias.

12. The liquid-solid separator as claimed in any one of the claims 8 through 10, characterized in that adjacent to the higher up outlet opening (23), the settling out basin (21) is provided with a sheet metal guide (25) directed away from the casing surface of the sieve drum (3).

13. The liquid-solid separator as claimed in any one of the claims 1 through 12 having a biasing device for the outlet chute (59), by means of which in the operational position a solids scraper (61) is able to be held pressed against the casing surface of the sieve drum (3) in uninterrupted engagement, characterized in that the biasing device consists of a double-girder-like relatively rotatable bias shaft (71) with rubber elements, borne between the two mutually concentrically mounted girders (71' and 7'') and producing the biasing forces, and in that preferably for the outlet chute (59) a release mechanism (65) is provided, by means of which the outlet chute (5) is able to be brought out of engagement with the sieve drum (3).

14. The liquid-solid separator as claimed in any one of the claims 1 through 13, characterized in that an outlet chute (59) which is provided, is able to be folded outward.

15. The liquid-solid separator as claimed in any one of the claims 1 through 14 comprising a further cleaning device (77) for the sieve drum (3), characterized in that the cleaning device (77) possesses a spraying and sprinkling device (79) and/or a bristle cleaning element (81), which respectively act on the inside and on the outside.

16. The liquid-solid separator as claimed in any one of the claims 1 through 15, characterized in that on its oppositely placed ends the sieve drum (3) is provided with a respective annular flange which projects radially inward or inward and outward.

17. The liquid-solid separator as claimed in claim 16, characterized in that between the annular flange (5) and the corresponding centering wall, more particularly in the form of the housing inner wall surface, at least in sections slide members or slide rolls are arranged.

## Revendications

1. Séparateur liquide-solide et, en particulier, séparateur à lisier, ayant les caractéristiques suivantes:
- il est prévu un tambour de tamisage (3) pouvant être entraîné dans la direction périphérique;
- il est prévu une chambre de séparation pour le mélange liquide-solide à séparer;
- une découpe de l'enveloppe du tambour de tamisage (3) constitue une zone de séparation (13);
- à l'intérieur et à l'extérieur du tambour de tamisage (3) sont prévus des rouleaux de pression intérieur et extérieur (35, 37), qui roulent sur l'enveloppe du tambour de tamisage (3) et soutiennent le tambour de tamisage et qui servent à faciliter la séparation du mélange solide-liquide;
- la zone de séparation (13) est suivie d'une extraction des matières solides (59, 61) quand on regarde dans le sens de rotation du tambour de tamisage (3);
- il est prévu un dispositif de réglage de la pression (39), qui présente, pendant le fonctionnement, un accumulateur de force réglable (45);
caractérisé par les autres caractéristiques suivantes:
- le dispositif de réglage de la pression (39) de chaque rouleau de pression (37) pour régler les forces de compression des rouleaux de pression (35) par rapport au tambour de tamisage (3) comprend un levier basculant (43) à l'extrémité libre duquel est connecté l'accumulateur de force correspondant (45);
- les rouleaux de pression (35, 37) présentent une texture de surface (87); et
- la texture de surface (87) au moins du rouleau de pression intérieur (35, 37) comporte une structure à noppes ou à rainures.

2. Séparateur liquide-solide selon la revendication 1, caractérisé en ce que la texture de surface (87) comprend plusieurs renfoncements en forme de rainures, qui sont disposés dans la direction périphérique radiale ou également avec des constituants orientés en direction axiale par rapport aux rouleaux de pression correspondants (35, 37), lesdits renfoncements étant disposés, de préférence, les uns à côté des autres, ou suivant des motifs qui se recoupent.

3. Séparateur liquide-solide selon la revendication 1 ou 2, caractérisé en ce que les accumulateurs de force (45) des leviers basculants (43) agissent avec décalage sur les rouleaux de pression (35, 37) soumis à pression par ceux-ci.

4. Séparateur liquide-solide selon l'une des revendications 1 à 3, caractérisé en ce que chaque levier basculant (43) est raccordé, du côté extérieur du boîtier, à un axe (41) et est pourvu de plaques de maintien et d'étanchéité (55) sur lesquelles les axes des rouleaux de pression réglables(37), qui passent à travers une fente du côté du boîtier, sont maintenus dans une position de montage recouvrant de manière étanche cette fente.

5. Séparateur liquide-solide selon la revendication 4, caractérise en ce que, en vue latérale frontale axiale des rouleaux de pression (37) chargés au moyen des leviers basculant (43), un angle de moins de ± 25° et, en particulier, de moins de ± 15° et, de préférence encore, de moins de ± 10° ou de ± 5°, est inclus entre une tangente passant par le point de contact entre un rouleau de pression (37) et un tambour de tamisage (3) et le levier basculant correspondant (43).

6. Séparateur liquide-solide selon l'une des revendications 1 à 5, caractérisé en ce que l'accumulateur de force (45) est disposé à peu près à angle droit par rapport au levier basculant correspondant (43).

7. Séparateur liquide-solide selon l'une des revendications 1 à 6, caractérisé en ce que l'accumulateur de force (45) est constitué d'un accumulateur de force hydraulique, pneumatique et/ou magnétique, éventuellement avec un accumulateur de force mécanique prévu en supplément.

8. Séparateur liquide-solide selon l'une des revendications 1 à 7, caractérisé en ce que la tubulure d'adduction (7) est située en dessous de la zone de séparation (13) et qu'une zone de décantation (19) est formée par un canal à écoulement montant.

9. Séparateur liquide-solide selon l'une des revendications 1 à 8, caractérisé en ce qu'il est prévu, entre la tubulure d'adduction inférieure (7) et la zone de séparation (13) supérieure à celle-ci, un élargissement (91) s'élargissant vers le haut en forme d'entonnoir.

10. Séparateur liquide-solide selon l'une des revendications 1 à 7, caractérisé en ce que la chambre de séparation est précédée par une zone de décantation et/ou de tranquillisation (19) disposée parallèlement au tambour de tamisage (3) avec un fond de cuve (21) disposé plus bas que l'adduction (7) afin de faire décanter les corps étrangers.

11. Séparateur liquide-solide selon l'une des revendications 1 à 10, caractérisé en ce que la paroi de limitation du côté du tambour de tamisage, allant de la tubulure d'adduction (7) jusqu'à la zone de séparation (13), se continue par l'élargissement prévu de préférence en forme d'entonnoir (91) dans une languette élastique (93) appuyant avec précontrainte sur l'enveloppe du tambour de tamisage.

12. Séparateur liquide-solide selon l'une des revendications 8 à 10, caractérisé en ce que la cuve de décantation (21) es pourvue, dans la zone vers l'orifice de sortie supérieure (23), d'une tôle de guidage (25), qui s'écarte de l'enveloppe cylindre du tambour de tamisage (3).

13. Séparateur liquide-solide selon l'une des revendications 1 à 12, avec un dispositif de précontrainte pour la glissière d'évacuation (59) au moyen de laquelle, en position de fonctionnement, un racleur à matière solide (61) du côté du tambour de tamisage, peut être maintenu appuyé continuellement sur la surface cylindrique du tambour de tamisage (3), caractérisé en ce que le dispositif de précontrainte est constitué d'un axe de précontrainte (71) en forme de double profil et pouvant tourner relativement l'un à l'autre avec, entre les deux profils (71', 71''), disposés concentriquement l'un par rapport à l'autre, et les éléments en caoutchouc créant les forces de précontrainte, et en ce qu'il est prévu, de préférence, pour la glissière d'évacuation (59), un mécanisme de desserrage (65) au moyen duquel la glissière d'évacuation (5) peut être mise en contact extérieur avec le tambour de tamisage (3).

14. Séparateur liquide-solide selon l'une des revendications 1 à 13, caractérisé en ce qu'une glissière d'évacuation prévue (59) peut être rabattue extérieurement.

15. Séparateur liquide-solide selon l'une des revendications 1 à 14, avec un dispositif de nettoyage supplémentaire (77) pour le tambour de tamisage (3), caractérisé en ce que le dispositif de nettoyage (77) comprend un dispositif de projection et de pulvérisation (79) et/ou un élément de nettoyage à brosse (81), qui fonctionnent chacun de l'intérieur vers l'extérieur.

16. Séparateur liquide/solide selon l'une des revendications 1 à 15, caractérisé en ce que le tambour de tamisage (3) est pourvu, sur ses faces frontales opposées, d'une bride annulaire (5) faisant saillie radialement vers l'intérieur ou vers l'intérieur et l'extérieur.

17. Séparateur liquide-solide selon la revendication 16, caractérisé en ce que, entre la bride annulaire (5) et la paroi de centrage correspondante et, en particulier, la paroi intérieure du boîtier, sont disposés, au moins par section, des glissières ou des galets de glissement.
